Europäisches Patentamt

European Patent Office

Office européen des brevets

(11) Veröffentlichungsnummer: **0 026 833**
**B1**

(12) **EUROPÄISCHE PATENTSCHRIFT**

(45) Veröffentlichungstag der Patentschrift:
**22.12.82**

(51) Int. Cl.³: **H 02 K 5/22, H 01 R 4/64**

(21) Anmeldenummer: **80105042.8**

(22) Anmeldetag: **25.08.80**

(54) Schutzleiteranschluss für Motoren, insbesondere Aussenläufer-Kleinmotoren, und Verfahren für seine Herstellung.

(30) Priorität: **07.09.79 DE 2936290**
**21.12.79 DE 2951864**

(43) Veröffentlichungstag der Anmeldung:
**15.04.81 Patentblatt 81/15**

(45) Bekanntmachung des Hinweises auf die Patenterteilung:
**22.12.82 Patentblatt 82/51**

(84) Benannte Vertragsstaaten:
**CH DE FR GB IT LI SE**

(56) Entgegenhaltungen:
**DD-A-127 251**
**DE-U-1 791 264**
**DE-U-7 630 468**
**DE-U-7 828 796**
**DE-U-7 925 448**
**US-A-2 810 112**

(73) Patentinhaber: **SIEMENS AKTIENGESELLSCHAFT**
**Berlin und München, Postfach 22 02 61,**
**D-8000 München 22 (DE)**

(72) Erfinder: **Deutloff, Norbert, Steigstrasse 3,**
**D-8702 Thüngersheim (DE)**
Erfinder: **Pieper, Wolfgang, Kirchbühlstrasse 4,**
**D-8700 Würzburg (DE)**
Erfinder: **Voigt, Claus-Dieter, Dipl.-Ing., Eichenstrasse 8,**
**D-8702 Rottendorf (DE)**

Schutzleiteranschluss für Motoren, insbesondere Aussenläufer-Kleinmotoren, und Verfahren für seine Herstellung

Die Erfindung bezieht sich auf einen Schutzleiteranschluss für Motoren, insbesondere für Aussenläufer-Kleinmotoren mit einer zwischen Wickelkopf und festem Lagerschild am Kragen einer Isolierendscheibe gehalterten Leiterplatte zum Anschluss des Motoranschlusskabels an die Motorwicklungen, mit einem in eine stirnseitige Öffnung des Ständerblechpaketes eingelegten und form- und/oder kraftschlüssig festgeklemmten Schutzleiteranschlussteil; ein derartiger Schutzleiteranschluss ist durch das DE-U-76 30 468 bekannt.

Bei dem bekannten Anschluss wird eine Schutzleiteranschlussklemme stirnseitig zwischen dem Ständerblechpaket und dem anliegenden Lagerbügel eingeklemmt; dazu ist in das geschichtete Ständerblechpaket stirnseitig eine Einlegenut geringer axialer Tiefe eingebracht und in die Einlegenut eine mit gegenüber dieser mit einem Übermass versehene Schutzleiteranschlussklemme eingelegt, die bei der Montage des Lagerbügels in die vorzugsweise konisch zulaufende Einlegenut eingedrückt und derart form- und/oder kraftschlüssig festgeklemmt ist.

Aufgabe der vorliegenden Erfindung ist es, den Schutzleiteranschluss am Ständerblechpaket eines Motors, insbesondere eines Aussenläufer-Kleinmotors mit einer zwischen Wickelkopf und festem Lagerschild am Kragen einer Isolierendscheibe gehalterten Leiterplatte zum Anschluss des Motoranschlusskabels an die Motorwicklung, zu vereinfachen und trotzdem auch bei rauher Betriebsweise eine sichere elektrische Kontaktierung zu gewährleisten.

Die Lösung dieser Aufgabe ist ausgehend von einem Schutzleiteranschluss der eingangs genannten Art erfindungsgemäss dadurch möglich, dass die Öffnung als dicht unterhalb der äusseren Umfangsfläche des Ständerblechpaketes vorzugsweise axial verlaufende Einsteckbohrung für ein abisoliertes Ende des Schutzleiters ausgebildet und das eingesteckte abisolierte Ende durch ein aussen am Ständerblechpaket über der Einsteckbohrung angesetztes Verstemmwerkzeug festklemmbar ist.

Der erfindungsgemässe Schutzleiteranschluss gewährleistet in herstellungstechnisch einfacher Weise eine sichere Kontaktierung zwischen dem zu schützenden Motor und dem Schutzleiter, da unabhängig von dem Anschluss des äusseren Motoranschlusskabels an die eigentliche Motorwicklung und vor der Montage des Lagerschildes das abisolierte Ende des Schutzleiters in die Einsteckbohrung des Ständerblechpaketes eingesteckt und in sicherer Entfernung zu den übrigen Anschluss- und Wicklungsteilen durch ein aussen am Ständerblechpaket angesetztes Verstemmwerkzeug festklemmbar ist.

Die Einsteckbohrung kann in fertigungstechnisch besonders einfacher Weise bei einem üblicherweise lamellierten Ständerblechpaket aus hintereinanderliegenden, beim Stanzen der einzelnen Blechlamellen miteingestanzten Einstecklöchern gebildet werden. Nach zweckmässigen Ausgestaltungen ist weiterhin vorgesehen, das abisolierte Ende des Schutzleiters vor dem Einstecken durch Verlöten oder Hochfrequenzverschweissen zu verfestigen. Eine besonders vorteilhafte vorherige Verfestigung kann durch das einfache Anschlagen einer Aderendhülse erreicht werden; dadurch wird einerseits ohne massgeblichen Übergangsspannungsabfall eine sichere Verstemmung gewährleistet und andererseits eine elastische und schwingungsunempfindliche Verbindung, insbesondere im unmittelbaren Übergang zwischen dem Eingang der Einsteckbohrung und dem anschliessenden nicht verfestigten Leitungs- bzw. Litzenteil des Schutzleiters sichergestellt.

Zur Gewährleistung einer definierten Einstecktiefe des in die Einsteckbohrung eingeführten Schutzleiteranschlusses, insbesondere zur Verhinderung einer Einführung über das abisolierte Ende hinaus, ist nach einer weiteren vorteilhaften Ausgestaltung der Erfindung an dem Ende des einzuführenden Schutzleites oder im Inneren der Einsteckbohrung ein Anschlag vorgesehen, durch den die Einstecktiefe des abisolierten Endes des Schutzleiters begrenzbar ist; eine derartige Begrenzung ist insbesondere bei solchen Motoren zweckmässig, bei denen die Einsteckbohrung durchgehend über die gesamte Länge des Ständerblechpaketes verläuft und länger als das zu verklemmende abisolierte Ende des Schutzleiters ist.

Bei einer angeschlagenen Aderendhülse kann ein solcher Anschlag vorteilhaft dadurch erreicht werden, dass die Aderendhülse an ihrem der Isolierung des Schutzleiters zugewandten Ende mit einem Anschlaglappen versehen ist, der bei bis zur vorgesehenen Einstecktiefe in die Einsteckbohrung eingebrachtem abisolierten Ende an der Stirnseite des Blechpaketes anliegt. Eine andere vorteilhafte Massnahme zur Erzielung eines Anschlages ohne besondere konstruktive Massnahmen am abisolierten Ende oder an der Aderendhülse ist dadurch gekennzeichnet, dass die Einsteckbohrung am Ende der Einstecktiefe mit einer Verengung versehen ist, wobei in fertigungstechnisch aufwandsarmer Weise die Einsteckbohrung durch ein aussen am Ständerblechpaket über der Einsteckbohrung im Bereich der Verengung angesetztes Verstemmwerkzeug vorverstemmbar ist. Dadurch ist es möglich, die Einsteckbohrung für das abisolierte Ende in einem der Einstecktiefe entsprechenden Abstand zu der Stirnseite des Blechpaketes einzuengen, derart dass anschliessend das Schutzleiteranschlussende bis zur Anlage an der Verengung eingeschoben werden kann und damit auf einfache Weise in richtigem Abstand positionierbar ist. Der anschliessende Verstemmvorgang stellt dann die eigentliche Schutzleiterverbindung mit gewährleisteter elektrischer Kontaktierung zum Blechpaket her.

Durch den Anschlaglappen an der Aderendhülse oder durch das Vorverstemmen der Einsteckbohrung wird also auf einfache Weise verhindert, dass bei der Montage des Motors der Schutzleiteranschluss undefiniert weit in die durch das gesamte Ständerblechpaket durchlaufende Bohrung eingeführt werden kann. Es werden somit Verbindungen zwischen Schutzleiter und Blechpaket verhindert, die den Schutzleiter entweder zu kurz oder zu weit fassen. Insbesondere bei einer zu weiten Einschiebung des Schutzleiters über das abisolierte Ende hinaus bestände ansonsten ohne besondere Vorsichtsmassnahmen des Montagepersonals die Gefahr, dass nicht der blanke Leiter allein sondern auch Teile der Isolierhülle verstemmt werden und somit der sichere elektrische Übergang zwischen Schutzleiter einerseits und Ständerpaket andererseits nicht mit Sicherheit gewährleistet werden kann.

Die Erfindung wird im folgenden anhand eines in der Zeichnung schematisch dargestellten Ausführungsbeispiels eines Aussenläufermotors erläutert. Darin zeigt:

Fig. 1 in einem Längsschnittbild das Ständerblechpaket und einen noch nicht mit dem Ständerblechpaket montierten Lagerschild eines Aussenläufermotors,

Fig. 2 eine Teilansicht des Ständerblechpaketes in Richtung A bzw. B gemäss Fig. 1,

Fig. 3 in einem Detailausschnitt die Zweifachverstemmung der Einsteckbohrung,

Fig. 4 in einem Teilschnittbild die mit einem Anschlaglappen an der Stirnseite des Blechpaketes anliegende Aderendhülse,

Fig. 5 in vergrösserter Darstellung die Aderendhülse gemäss Fig. 4.

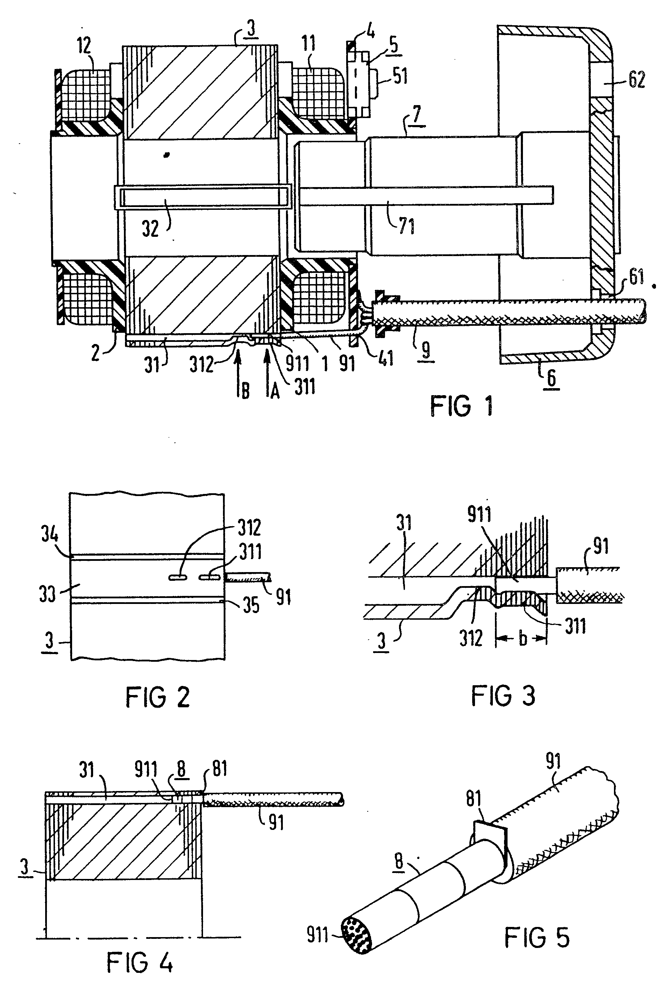

Fig. 1 zeigt den Ständer eines Aussenläufermotors. Über die beiden Stirnseiten des Ständerblechpaketes 3 ragen die Wickelköpfe 11, 12 der gewickelten Ständerwicklung. Die Wickelköpfe 11, 12 sind zu den Stirnseiten des Statorblechpaketes 3 durch je eine Isolierendscheibe 1 bzw. 2 isoliert.

In der rechten Hälfte der Fig. 1 ist ein gegossener Lagerschild 6 mit einem einstückig angeformten ebenfalls metallenen Innenrohr 7 dargestellt. Der Lagerschild 6 dient insbesondere zur äusseren Halterung des gesamten Aussenläufermotors. Bei der gegenseitigen Montage von Lagerschild 6 und Ständerblechpaket 3 wird das Innenrohr 7 mit dem angeformten Lagerschild 6 in die Ständerbohrung des Ständerblechpaketes 3 eingeschoben und durch kraft- und/oder formschlüssigen Sitz gehalten. Zur gegenseitigen Ausrichtung von Innenrohr 7 und Ständerblechpaket 3 dient eine Keilnut 71 auf dem Innenrohr 7 und ein entsprechender Längskeil 32 an der Innenfläche der Ständerbohrung des Ständerblechpaketes 3. Das Innenrohr 7 nimmt die Wellenlager für die sogenannte Aussenglocke auf, die als Läufer, insbesondere Kurzschlussläufer den gesamten Ständer bis nahezu axial an den Lagerschild 6 reichend übergreift.

Die Isolierendscheiben 1 bzw. 2 isolieren nicht nur die Stirnseiten des Statorblechpaketes 3 sondern auch mit einem axial vorstehenden und über den Wickelkopf 11, 12 hinausragenden Kragen die Ständerwicklung gegenüber dem radial innen benachbarten Teil des Innenrohrs 7. An dem nach aussen axial über den Wickelkopf 11 hinausragenden Kragen der Isolierendscheibe 1 ist freiliegend zu der Stirnseite des Wickelkopfes 11 eine Leiterplatte 4 befestigt.

Die Leiterplatte 4 ist mit aufgedruckten Kupferleitbahnen versehen, die die einzelnen zur Leiterplatte 4 hingeführten Anschlussdrähte der Ständerwicklung zu einer Stelle zusammenführen, an die das äussere Motoranschlusskabel 9 verlegt ist. Zur Durchführung des äusseren Motoranschlusskabels 9 ist im Lagerschild 6 eine Öffnung 61 vorgesehen. Ferner ist in einer Ausnehmung der Leiterplatte 4 ein Thermowächter 5 im Zuge der Kupferleitbahnen derart angeordnet, dass er mit seiner motorseitigen Fläche in innigem Wärmekontakt zur Ständerwicklung steht, und an seiner gegenüberliegenden Stirnseite mit einem insbesondere zur Wiedereinschaltung nach einem Ansprechen vorgesehenen Betätigungsknopf 51 versehen, der im fertigen Montagezustand des Aussenläufermotors durch eine Öffnung 62 des Lagerschildes 6 betätigbar ist.

Wie zuvor erläutert, führen von dem äusseren durch die Öffnung 61 des Lagerschildes 6 hindurchgesteckten Motoranschlusskabels 9 die Speiseleitung für die Ständerwicklung zu der Leiterplatte 4 und von dort über die gedruckten Kupferleitbahnen zu den aus der Ständerwicklung herausgeführten Anschlusswicklungsdrähten. Wie im unteren teil aus Fig. 1 ersichtlich, wird von dem Motoranschlusskabel 9 weiterhin ein Schutzleiter 91 an dem Wickelkopf 11 vorbei zur rechten Stirnseite des Ständerblechpaketes 3 geführt. In diesem Ständerblechpaket 3 ist dicht unterhalb der äusseren Umfangsfläche eine axial durchlaufende Einsteckbohrung 31 vorgesehen. Diese Einsteckbohrung 31 ergibt sich beim Aufeinanderschichten der einzelnen Lamellen des Ständerblechpaketes 3, in die beim Einzelstanzen bereits ein jeweiliges Einsteckloch im Bereich der späteren Einsteckbohrung 31 miteingestanzt wird.

Das in die Einsteckbohrung 31 reichende Ende 911 des Schutzleiters 91 ist abisoliert und vor dem Einstecken mit einer angeschlagenen Aderendhülse 8 versehen. Dadurch ergibt sich einerseits eine relativ feste Zusammenfassung der einzelnen Litzendrähte des Schutzleiters 91 und andererseits aufgrund der Aderendhülsenmasse ein definierter Durchmesser des einzusteckenden Teils des Schutzleiters 91.

Um eine zusätzliche geführte Halterung des Schutzleiters zwischen Lagerschild und Einsteckbohrung zu erhalten, ist in vorteilhafter Weise vorgesehen, dass der Schutzleiter 91 zwischen Lagerschild 6 und Einteckbohrung 31 durch eine Öffnung 41 der Leiterplatte 4 geführt ist.

Wie aus Fig. 2 ersichtlich, verläuft die Einsteckbohrung 31 mittig in einem zwischen zwei benachbarten Nuten 34, 35 gelegenen Ständerzahn 33. Nach dem Einstecken des abisolierten Endes 911 des Schutzleiters 91 und der an diesem Ende angeschlagenen Aderendhülse 8 wird am äusseren Umfang des Ständerblechpaketes 3 im Bereich des eingesteckten Endes 911 in Richtung A (Fig. 1) ein Verstemmwerkzeug angesetzt und durch Verstemmen die Aderendhülse 8 in der Einsteckbohrung 31 festgeklemmt. Wie aus Fig. 3 ersichtlich, ergibt sich nach dem Verstemmen am Aussenumfang des Ständerblechpaketes 3 eine erkennbare leichte Stauchvertiefung 311 im Bereich des zuvor angesetzten Verstemmwerkzeuges.

In Fig. 2 und Fig. 3 ist neben der Stauchvertiefung 311 durch das im Bereich des eingesteckten Endes 911 angesetzte (Richtung A) Verstemmwerkzeug noch eine Einengung 312 der Einsteckbohrung 31 eingezeichnet. Diese Einengung 312 dient dazu, in einfacher Weise bei der Anbringung des Schutzleiters 91 am Blechpaket 3 die gewünschte Einstecktiefe b des abisolierten Endes 911 des Schutzleiters 91 zu gewährleisten. Dazu muss die Einengung 312 zumindest soweit die Öffnung der Einsteckbohrung 31 verkleinern, dass – wie aus Fig. 3 ersichtlich – das linke freie abisolierte Ende 911 des Schutzleiters 91 nicht über die Einengung 312 hinaus in die Einsteckbohrung 31 eingeführt werden kann.

Zweckmässigerweise wird durch einen Vorverstemmvorgang mittels eines im Bereich der vorzusehenden Einengung 312 aussen am Ständerblechpaket 3 über der Einsteckbohrung 31 in Richtung B anzusetzenden Verstemmwerkzeuges zunächst die Einsteckbohrung 31 entsprechend eingeschnürt und anschliessend das abisolierte Ende 911 des Schutzleiters 91 richtig positioniert bis zur Einstecktiefe b eingesteckt; danach erfolgt der eigentliche Hauptverstemmvorgang mittels des dann im Bereich des eingesteckten Endes 911 aussen am Ständerblechpaket in Richtung A angesetzten Verstemmwerkzeuges. Wie aus Fig. 3 ersichtlich, ist damit eine Festlegung des Schutzleiters mit definierter Einstecktiefe und entsprechend sicherer Halterung am Ständerblechpaket 3 gewährleistet und andererseits vermieden, dass durch zu tiefes Einstecken des Schutzleiters 91 dessen nicht abisoliertes rechtes Ende mitverstemmt wird und eine gute elektrische Kontaktierung zum Blechpaket verhindert.

Während für den Festklemmvorgang gemäss Fig. 2 und Fig. 3 das abisolierte Ende 911 nicht unbedingt eine angeschlagene Aderendklemme und insbesondere keine Spezialausführung einer solchen Aderendklemme aufweisen muss, ist bei der Einschubsicherung des Schutzleiters gemäss Fig. 3 und Fig. 4 eine Aderendklemme 8 mit einem zusätzlichen Anschlaglappen 81 notwendig, jedoch erübrigt sich im letzteren Fall ein gesonderter Vorverstemmvorgang zur Sicherung einer definierten Einstecktiefe des Schutzleiters. Die gewünschte Einstecktiefe b wird bei der Ausführung nach Fig. 3 dadurch gewährleistet, dass beim Einstecken des abisolierten Endes 911 des Schutzleiters 91 dieser bei Erreichen der Einstecktiefe b mit dem radial vorstehenden Anschlaglappen 81 an der rechten Stirnseite des Blechpaketes 3 zur Anlage kommt und somit ein zu tiefes Einstecken verhindert.

Nach dem Einstecken und Festklemmen des Schutzleiters wird dann in die Ständerbohrung des derart komplettierten und verschalteten Ständerblechpaketes 3 das metallene und in mechanischer und elektrisch gut leitender Verbindung zum gegossenen Lagerschild 6 stehende Innenrohr 7 eingebracht, wobei das Motoranschlusskabel 9 durch die Öffnung 61 des Lagerschildes 6 nachgezogen wird und in der entgültigen Montagestellung der Betätigungsknopf 51, vorzugsweise dicht anliegend, in die andere Öffnung 62 des Lagerschildes ragt.

Entsprechend sind bei einem besonders zweckmässigen Verfahren zur Herstellung des Schutzleiteranschlusses mit einer an dessen blankem Ende 911 angeschlagenen Aderendhülse 8 mit zusätzlichem Anschlaglappen 81 nach dem Bewickeln des Ständerblechpaketes 3 mit stirnseitig anliegenden Isolierendscheiben 1, 2 und nach dem Anschluss der Motorwicklungen an die nach dem Bewickeln am Kragen der einen Isolierendscheibe 1 befestigten Leiterplatte 4 von dem Motoranschlusskabel 9 die Speiseleitungen an die Leiterplatte 4 angeschlossen sowie der Schutzleiter 91 an seinem abisolierten Ende 911 mit der angeschlagenen Aderendhülse 8 versehen und in die, vorzugsweise durch das gesamte Ständerblechpaket 3 durchgehende Einsteckbohrung 31 bis zum Anliegen des Anschlaglappens 81 an der Stirnseite des Ständerblechpaketes eingesteckt. Anschliessend wird das Ende 911 durch das am äusseren Umfang des Ständerblechpaketes 3 einwirkende Verstemmwerkzeug festgeklemmt und schliesslich in die Bohrung des derart komplettierten Ständerblechpaketes 3 das metallene Innenrohr 7 mit dem daran befestigten Lagerschild 6 eingebracht.

Sind am Schutzleiter 91 bzw. an dessen abisoliertem Ende 911 selbst keine Anschlagmittel vorgesehen, so besteht das zur Herstellung des Schutzleiteranschlusses zweckmässige Verfahren darin, dass nach dem Bewickeln des Ständerblechpaketes 3 mit stirnseitig anliegenden Isolierendscheiben 1, 2 und nach dem Anschluss der Motorwicklungen an die nach dem Bewickeln am Kragen der einen Isolierendscheibe 1 befestigten Leiterplatte 4 von dem Motoranschlusskabel 9 die Speiseleitungen an die Leiterplatte 4 angeschlossen, dann die vorzugsweise durch das gesamte Ständerblechpaket 3 durchgehende Einsteckbohrung 31 durch Vorverstemmen im Abstand der Einstecktiefe b verengt und der Schutzleiter 91 mit seinem abisolierten Ende 911 bis zum Anschlag an die Verengung 312 eingesteckt werden, anschliessend durch Hauptverstemmen das eingesteckte Ende in der Einsteckbohrung 31 festgeklemmt und schliesslich in die Bohrung des derart komplettierten Ständerblechpaketes 3 das metallene Innenrohr 7 mit dem daran befestigten Lagerschild 6 eingebracht wird.

**Patentansprüche**

1. Schutzleiteranschluss für Motoren, insbesondere für Aussenläufer-Kleinmotoren mit einer zwischen Wickelkopf (11) und festem Lagerschild (6) am Kragen einer Isolierendscheibe (1) gehaltenen Leiterplatte (4) zum Anschluss des Motoranschlusskabels (9) an die Motorwicklungen, mit einem in eine stirnseitige Öffnung (31) des Ständerblechpaketes (3) eingelegten und form- und/oder kraftschlüssig festgeklemmten Schutzleiteranschlussteil (911), dadurch gekennzeichnet, dass die Öffnung als dicht unterhalb der äusseren Umfangsfläche des Ständerblechpaketes (3) vorzugsweise axial verlaufende Einsteckbohrung (31) für ein abisoliertes Ende (911) des Schutzleiters (91) ausgebildet und das eingesteckte abisolierte Ende (911) durch ein aussen am Ständerblechpaket (3) über der Einsteckbohrung (31) angesetztes (Richtung A) Verstemmwerkzeug festklemmbar ist.

2. Schutzleiteranschluss nach Anspruch 1 für ein lamelliertes Ständerblechpaket, dadurch gekennzeichnet, dass die Einsteckbohrung (31) durch hintereinanderliegende, beim Stanzen der einzelnen Blechlamellen miteingestanzte Einstecklöcher gebildet ist.

3. Schutzleiteranschluss nach Anspruch 1 oder 2, dadurch gekennzeichnet, dass das abisolierte Ende (911) des Schutzleiters (91) vor dem Einstecken verfestigt ist.

4. Schutzleiteranschluss nach Anspruch 3, dadurch gekennzeichnet, dass das abisolierte Ende (911) des Schutzleiters (91) verlötet ist.

5. Schutzleiteranschluss nach Anspruch 3, dadurch gekennzeichnet, dass das abisolierte Ende (911) des Schutzleiters (91) hochfrequenzverschweisst ist.

6. Schutzleiteranschluss nach Anspruch 3, dadurch gekennzeichnet, dass das abisolierte Ende (911) des Schutzleiters (91) mit einer angeschlagenen Aderendhülse (8) versehen ist.

7. Schutzleiteranschluss nach einem der Ansprüche 1 bis 6 für einen Aussenläufer-Kleinmotor mit einer zwischen Wickelkopf (11) und festem Lagerschild (6) am Kragen einer Isolierendscheibe (1) gehaltenen Leiterplatte (4), dadurch gekennzeichnet, dass der Schutzleiter (91) zwischen Lagerschild (6) und Einsteckbohrung (31) durch eine Öffnung (41) der Leiterplatte (4) geführt ist.

8. Schutzleiteranschluss nach einem der Ansprüche 1 bis 7, dadurch gekennzeichnet, dass an dem Ende des Schutzleiters (91) oder im Innern der Einsteckbohrung (31) ein Anschlag vorgesehen ist, durch den die Einstecktiefe (b) des abisolierten Endes (911) des Schutzleiters (91) begrenzbar ist.

9. Schutzleiteranschluss nach Anspruch 8, dadurch gekennzeichnet, dass die an das abisolierte Ende (911) des Schutzleites (91) angeschlagene Aderendhülse (8) an ihrem der Isolierung des Schutzleiters (91) zugewandten Ende mit einem Anschlaglappen (81) versehen ist, der bei bis zur vorgesehenen Einstecktiefe (b) in die Einsteckbohrung (31) eingebrachtem abisolierten Ende (911) an der Stirnseite des Ständerblechpaketes (3) anliegt.

10. Schutzleiteranschluss nach Anspruch 8, dadurch gekennzeichnet, dass die Einsteckbohrung (31) am Ende der Einstecktiefe (b) mit einer Verengung (312) versehen ist.

11. Schutzleiteranschluss nach Anspruch 10, dadurch gekennzeichnet, dass die Einsteckbohrung (31) durch ein aussen am Ständerblechpaket (3) über der Einsteckbohrung (31) im Bereich der Verengung (312) angesetztes (Richtung B) Verstemmwerkzeug vorverstemmbar ist.

12. Verfahren zur Herstellung eines Schutzleiteranschlusses nach Anspruch 6 oder 7, dadurch gekennzeichnet, dass nach dem Bewickeln des Ständerblechpaketes (3) mit stirnseitig anliegenden Isolierendscheiben (1, 2) und nach dem Anschluss der Motorwicklungen an eine nach dem Bewickeln am Kragen der einen Isolierendscheibe (1) befestigten Leiterplatte (4) von dem Motoranschlusskabel (9) die Speiseleitungen an die Leiterplatte (4) angeschlossen sowie der Schutzleiter (91) an seinem abisolierten Ende (911) mit einer angeschlagenen Aderendhülse (8) versehen und in die Einsteckbohrung (31) eingesteckt werden, anschliessend das Ende (911) durch das am äusseren Umfang des Ständerblechpaketes (3) einwirkende Verstemmwerkzeug festgeklemmt und schliesslich in die Bohrung des derart komplettierten Ständerblechpaketes (3) ein metallenes Innenrohr (7) mit dem daran befestigten Lagerschild (6) eingebracht wird.

13. Verfahren zur Herstellung eines Schutzleiteranschlusses nach Anspruch 8, dadurch gekennzeichnet, dass nach dem Bewickeln des Ständerblechpaketes (3) mit stirnseitig anliegenden Isolierendscheiben (1, 2) und nach dem Anschluss der Motorwicklungen an die nach dem Bewickeln am Kragen der einen Isolierendscheibe (1) befestigten Leiterplatte (4) von dem Motoranschlusskabel (9) die Speiseleitungen an die Leiterplatte (4) angeschlossen sowie der Schutzleiter (91) an seinem abisolierten Ende (911) mit der angeschlagenen Aderendhülse (8) versehen und in die vorzugsweise durch das gesamte Ständerblechpaket durchgehende Einsteckbohrung (31) bis zum Anliegen des Anschlaglappens (81) an der Stirnseite des Ständerblechpaketes (3) eingesteckt werden, anschliessend das Ende (911) durch das am äusseren Umfang des Ständerblechpaketes (3) einwirkende Verstemmwerkzeug festgeklemmt und schliesslich in die Bohrung des derart komplettierten Ständerblechpaketes (3) ein metallenes Innenrohr (7) mit dem daran befestigen Lagerschild (6) eingebracht wird.

14. Verfahren zur Herstellung eines Schutzleiteranschlusses nach Anspruch 11, dadurch gekennzeichnet, dass nach dem Bewickeln des Ständerblechpakets (3) mit stirnseitig anliegenden Isolierendscheiben (1, 2) und nach dem Anschluss der Motorwicklungen an die nach dem Bewickeln am Kragen der einen Isolierendscheibe (1) befestigten Leiterplatte (4) von dem Motoranschlusskabel (9) die Speiseleitungen an die Leiterplatte (4) angeschlossen, dann die vorzugsweise durch das gesamte Ständerblechpaket durchgehende Einsteckbohrung (31) durch Vorverstemmen im Abstand der Einstecktiefe (b) verengt und der Schutzleiter (91) mit seinem abisolierten Ende (911) bis zum Anschlag an die Verengung (312) eingesteckt werden, anschliessend durch Hauptverstemmen das eingesteckte Ende in der Einsteckbohrung (31) festgeklemmt und schliesslich in die Bohrung des derart komplettierten Ständerblechpaketes (3) ein metallenes Innenrohr (7) mit dem daran befestigten Lagerschild (6) eingebracht wird.

**Claims**

1. Protected conductor connection for motors, in particular for external rotor-miniature motors comprising a circuit board (4) which is supported on the collar of an insulating end plate (1) between winding head (11) and fixed bearing plate (6) for the connection of the motor connection cable (9) to the motor windings, with a protected conductor connection portion which is inserted into an end-side opening (31) in the stator plate stack (3) and clamped in a shape-locked and/or force-locked manner, characterised in that the opening consists of a plug-in bore (31) which extends, preferably axially, closely beneath the outer peripheral surface of the stator plate stack (3), provided for an end (911), stripped of insulation, of the protected conductor (91), and the inserted insulation-stripped end (911) can be clamped by means of a caulking tool which is applied from the exterior to the stator plate stack (3) over the plug-in bore (31) (direction A).

2. Protected conductor connection as claimed in claim 1 for a laminated stator plate stack, characterised in that the plug-in bore (31) is formed by a series of plug-in holes which are stamped simultaneously to the stamping of the individual plate laminations.

3. Protected conductor connection as claimed in claim 1 or 2, characterised in that the insulation-stripped end (911) of the protected conductor (91) is attached prior to the plug-in process.

4. Protected conductor connection as claimed in claim 3, characterised in that the insulation-stripped end (911) of the protector conductor (91) is soldered.

5. Protector conductor connection as claimed in claim 3, characterised in that the insulation-stripped end (911) of the protected conductor (91) is high-frequency welded.

6. Protected conductor connection as claimed in claim 3, characterised in that the stripped end (911) of the protected conductor (91) is provided with a wire end sleeve (8) which is restrained by a stop means.

7. Protected conductor connection as claimed in one of the claims 1 to 6 for an external rotor-miniature motor comprising a circuit board (4) which is supported on the collar of an insulating end plate (1) between winding head (11) and fixed bearing plate (6) characterised in that the protected conductor (91) extends through an opening (41) in the circuit board (4) between the bearing plate (6) and the plug-in bore (31).

8. Protected conductor connection as claimed in one of the claims 1 to 7, characterised in that at the end of the protected conductor (91) or inside the plug-in bore (31) there is arranged a stop means which is capable of delimiting the plug-in depth (b) of the insulation-stripped end (911) of the protected conductor (91).

9. Protected conductor connection as claimed in claim 8, characterised in that at its end which faces towards the insulation of the protected conductor (91) the wire end sleeve (8) which restrains the insulation-stripped end (911) of the protected conductor (91) is provided with a stop lug (81) which, when the insulation-stripped end (911) is introduced to the predetermined depth (b) into the plug-in bore (31) contacts the end side of the stator plate stack (3).

10. Protected conductor connection as claimed in claim 8, characterised in that the plug-in bore (31) is provided at the end of the plug-in depth (b) with a constriction (312).

11. Protected conductor connection as claimed in claim 10, characterised in that the plug-in bore (31) may be preliminarily caulked by a caulking tool which is applied from the exterior to the stator plate stack (3) over the plug-in bore (31) in the region of the constriction (312) (direction B).

12. Process for the production of a protected conductor connection as claimed in claim 6 or 7, characterised in that following the cladding of the stator plate stack (3) with end-side insulating end plates (1, 2) and following the connection of the motor windings to a circuit board attached, following the cladding process, to the collar of the first insulating end plate (1), the supply lines are connected from the motor connection cable (9) to the circuit board (4), and at its insulation-stripped end (911) the protected conductor (91) is provided with a wire end sleeve (8) which features stop means and is inserted into the plug-in bore (31), whereupon the end (911) is clamped by the caulking tool which acts upon the outer periphery of the stator plate stack (3) and finally a metallic inner tube (7) with the bearing plate (6) attached thereto is introduced into the bore of the stator plate stack (3) which has been completed in this way.

13. Process for the production of a protected conductor connection as claimed in claim 8, characterised in that following the cladding of the stator plate stack (3) with end-side insulating end plates (1, 2) and following the connection of the motor windings to the circuit board (4) which, following the cladding process, is attached to the collar of the first insulating end plate (1) from the motor connection cable (9) the supply lines are connected to the circuit board (4) and at its insulation-stripped end (911) the protected conductor (91) is provided with the wire end sleeve (8) provided with stop means and is inserted into the plug-in bore (31), which preferably passes through the entire stator plate stack, until the stop lug (81) contacts the end side of the stator plate stack (3), whereupon the end (911) is clamped by the caulking tool which acts upon the outer periphery of the stator plate stack (3) and finally a metallic inner tube (7) with the bearing plate (6) attached thereto is introduced into the bore of the stator plate stack (3) which has been completed in this way.

14. Process for the production of a protected conductor connection as claimed in claim 11, characterised in that following the cladding of the stator plate stack (3) with end-side insulating end plates (1, 2) and following the connection of the motor windings to the circuit board (4) which, following the cladding process, is attached to the collar of the first insulating end plate (1), from the motor connection cable (9) the supply lines are connected to the circuit board (4) whereupon the plug-in bore (31), which preferably passes through the entire stator plate stack is constricted by preliminary caulking at the distance of the plug-in depth (b) and at its insulation-stripped end (911) the protected conductor (91) is inserted until it abuts against the constriction (312), whereupon, by means of the main caulking, the inserted end is clamped in the plug-in bore (31) and finally a metallic inner tube (7) with the bearing plate (6) attached thereto is inserted into the bore of the stator plate stack (3) which has been completed in this way.

**Revendications**

1. Raccordement pour le fil de protection de moteurs, en particulier de petits moteurs à rotor extérieur, comportant une plaquette de circuit imprimé (4), montée sur la collerette d'un disque isolant (1) entre une tête de bobine (11) et un flasque fixe (6), pour le raccordement du câble de branchement (9) du moteur aux enroulements du moteur, et comportant une pièce de raccordement (911) pour le fil de protection insérée dans une ouverture frontale (31) de l'empilage de tôles statoriques (3) et bloquée par formes complémentaires et/ou par transmission de force, caractérisé en ce que l'ouverture se présente sous la forme d'un perçage d'enfichage (31) s'étendant de préférence axialement tout près du dessous de la surface périphérique extérieure de l'empilage de tôles statoriques (3), pour une extrémité dénudée (911) du fil de protection (91), et que l'extrémité dénudée (911) enfichée peut être bloquée au moyen d'un outil de matage appliqué extérieurement (direction A) sur l'empilage de tôles statoriques (3) au-dessus du perçage d'enfichage (31).

2. Raccordement pour un fil de protection suivant la revendication 1 pour un empilage de tôles statoriques feuilleté, caractérisé en ce que le perçage d'enfichage (31) est formé par des trous d'enfichage disposés les uns derrière les autres et découpés lors du découpage des feuilles de tôles individuelles.

3. Raccordement pour un fil de protection suivant l'une des revendications 1 ou 2, caractérisé en ce que l'extrémité dénudée (911) du fil de protection (91) est renforcée avant l'enfichage.

4. Raccordement pour un fil de protection suivant la revendication 3, caractérisé en ce que l'extrémité dénudée (911) du fil de protection (91) est brasée.

5. Raccordement pour un fil de protection suivant la revendication 3, caractérisé en ce que l'extrémité dénudée (911) du fil de protection (91) est soudée à haute fréquence.

6. Raccordement pour un fil de protection suivant la revendication 3, caractérisé en ce que l'extrémité dénudée (911) du fil de protection (91) est munie d'un manchon d'extrémité d'âme maté (8).

7. Raccordement pour un fil de protection suivant l'une des revendications 1 à 6, pour un petit moteur à rotor extérieur comportant une plaquette de circuit imprimé (4) fixée sur la collerette d'un disque isolant (1) entre une tête d'enroulement (11) et un flasque fixe (6), caractérisé en ce que le fil de protection (91) est guidé à travers une ouverture (41) de la plaquette de circuit imprimé (4) entre le flasque (6) et le perçage d'enfichage (31).

8. Raccordement pour un fil de protection suivant l'une des revendications 1 à 7, caractérisé en ce qu'à l'extrémité du fil de protection (91) ou à l'intérieur du perçage d'enfichage (31) est prévue une butée par l'intermédiaire de laquelle la profondeur d'enfichage (b) de l'extrémité dénudée (911) du fil de protection (91) peut être limitée.

9. Raccordement pour un fil de protection suivant la revendication 8, caractérisé en ce que le manchon d'extrémité d'âme (8) fixé sur l'extrémité dénudée (911) du fil de protection (91) est muni à son extrémité tournée vers l'isolement du fil de protection (91) d'une languette de butée (81) qui s'appuie sur la face frontale de l'empilage de tôles statoriques (3) lorsque l'extrémité dénudée (911) est introduite dans le perçage d'enfichage (31) jusqu'à la profondeur d'enfichage prévue (b).

10. Raccordement pour un fil de protection suivant la revendication 8, caractérisé en ce que le perçage d'enfichage (31) est muni d'un rétrécissement (312) à l'extrémité de la profondeur d'enfichage (b).

11. Raccordement pour un fil de protection suivant la revendication 10, caractérisé en ce que le perçage d'enfichage (31) peut être prématé au moyen d'un outil de matage appliqué (direction B) extérieurement sur l'empilage de tôles statoriques (3), au-dessus du perçage d'enfichage (31), dans la région du rétrécissement (312).

12. Procédé pour la fabrication d'un raccordement de fil de protection suivant l'une des revendications 6 ou 7, caractérisé en ce qu'après le bobinage de l'empilage de tôles statoriques (3) comportant des disques isolants (1, 2) s'appuyant frontalement et après le raccordement des enroulements du moteur à une plaquette de circuit imprimé (4) fixée sur la collerette d'un des disques isolants (1), à partir du câble de raccordement (9) du moteur les conducteurs d'alimentation sont raccordés à la plaquette de circuit imprimé (4), et le fil de protection (91) est muni à son extrémité dénudée (911) d'un manchon d'extrémité d'âme fixé (8) et est enfiché dans le perçage d'enfichage (31), puis l'extrémité (911) est bloquée par l'outil de matage agissant sur la périphérie extérieure de l'empilage de tôles statoriques (3), et enfin un tube intérieur métallique (7), avec le flasque (6) qui y est fixé, est introduit dans le perçage de l'empilage de tôles statoriques (3) ainsi complété.

13. Procédé pour la fabrication d'un raccordement de fil de protection suivant la revendication 8, caractérisé en ce qu'après le bobinage de l'empilage de tôles statoriques (3) comportant des disques isolants (1, 2) s'appuyant frontalement et après le raccordement des enroulements du moteur à la plaquette de circuit imprimé (4) fixée sur la collerette d'un des disques isolants (1), à partir du câble de raccordement (9) du moteur les conducteurs d'alimentation sont raccordés à la plaquette de circuit imprimé (4) et le fil de protection (91) est muni à son extrémité dénudée (911) du manchon d'extrémité d'âme fixé (8) et est enfiché dans le perçage d'enfichage (31), traversant de préférence tout l'empilage de tôles statoriques (3), jusqu'à ce que la languette de butée (81) s'appuie sur la face frontale de l'empilage de tôles statoriques, puis l'extrémité (911) est bloquée par l'outil de matage agissant sur la périphérie extérieure de l'empilage de tôles statoriques (3), et enfin un tube intérieur métallique (7), avec le flasque (6) qui y est fixé, est introduit dans le perçage de l'empilage de tôles statoriques (3) ainsi complété.

14. Procédé pour la fabrication d'un raccordement de fil de protection suivant la revendication 11, caractérisé en ce qu'après le bobinage de l'empilage de tôles statoriques (3) comportant des disques isolants (1, 2) s'appuyant frontalement et après le raccordement des enroulements du moteur à la plaquette de circuit imprimé (4) fixée sur la collerette d'un des disques isolants (1), à partir du câble de raccordement (9) du moteur les conducteurs d'alimentation sont raccordés à la plaquette de circuit imprimé (4), puis le perçage d'enfichage (31), traversant de préférence tout l'empilage de tôles statoriques, est rétréci par prématage à la distance de la profondeur d'enfichage (b) et le fil de protection (91) est enfiché par son extrémité dénudée (911) jusqu'à ce qu'il bute sur le rétrécissement (312), puis l'extrémité enfichée est bloquée dans le perçage d'enfichage par un matage principal, et enfin un tube intérieur métallique (7), avec le flasque (6) qui y est fixé, est introduit dans le perçage de l'empilage de tôles statoriques (3) ainsi complété.

FIG 1

FIG 2

FIG 3

FIG 4

FIG 5